(19) Europäisches Patentamt
European Patent Office
Office européen des brevets

(11) EP 4 129 456 A1

(12) # EUROPEAN PATENT APPLICATION
published in accordance with Art. 153(4) EPC

(43) Date of publication:
**08.02.2023 Bulletin 2023/06**

(21) Application number: **21776506.4**

(22) Date of filing: **17.02.2021**

(51) International Patent Classification (IPC):
***B01D 69/12*** *(1990.01)* ***B01D 61/36*** *(1990.01)*
***B01D 69/00*** *(1990.01)* ***B01D 69/10*** *(1990.01)*
***B01D 71/38*** *(1990.01)* ***B01D 71/52*** *(1990.01)*
***B01D 71/54*** *(1990.01)* ***B01D 71/64*** *(1990.01)*

(52) Cooperative Patent Classification (CPC):
**B01D 61/36; B01D 69/00; B01D 69/10; B01D 69/12; B01D 71/38; B01D 71/52; B01D 71/54; B01D 71/64**

(86) International application number:
**PCT/JP2021/005888**

(87) International publication number:
**WO 2021/192745 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2020 JP 2020054136**

(71) Applicant: **NITTO DENKO CORPORATION**
**Ibaraki-shi**
**Osaka 567-8680 (JP)**

(72) Inventors:
- **KATAGIRI Makoto**
  **Ibaraki-shi, Osaka 567-8680 (JP)**
- **NISHIYAMA Shinya**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **SEPARATION FILM**

(57) The present invention provides a separation membrane that allows a separation functional layer to have less defects and that inhibits a flux of a permeation fluid from decreasing. A separation membrane 10 of the present invention includes a separation functional layer 1, an interlayer 2, and a porous support member 3 in this order in a stacking direction. The interlayer has a thickness of 0.1 μm to 2.5 μm. A total value of the thickness of the interlayer 2 and a thickness of the separation functional layer is less than 4.0 μm. The interlayer 2 contains a polymer compound (E), for example. A distance Ra between a Hansen solubility parameter of the polymer compound (E) and a Hansen solubility parameter of $H_2O$ is less than 19 $MPa^{1/2}$, for example.

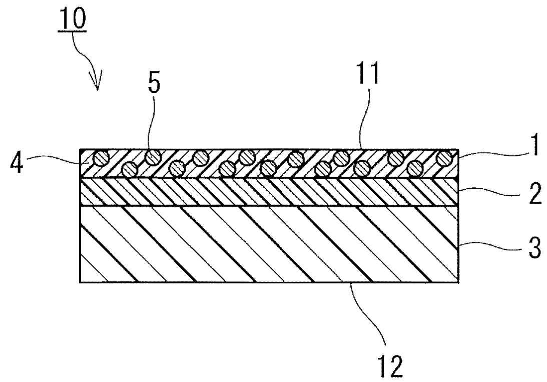


FIG.1

EP 4 129 456 A1

## Description

TECHNICAL FIELD

The present invention relates to a separation membrane.

BACKGROUND ART

A pervaporation method and a vapor permeation method have been developed as methods for separating water from a liquid mixture containing an alcohol and water. These methods are particularly suitable for separating water from an azeotropic mixture such as a liquid mixture containing ethanol and water. The pervaporation method is also characterized in that it does not require the liquid mixture to be evaporated before being treated.
As a separation membrane used for the pervaporation method, a composite membrane obtained by forming a separation functional layer on a porous support member can be mentioned. In the field of separation membranes, an interlayer is disposed between a separation functional layer and a porous support member to reduce a thickness of the separation functional layer in some cases (such as Patent Literature 1).

CITATION LIST

Patent Literature

Patent Literature 1: JP 1986-54222 A

SUMMARY OF INVENTION

Technical Problem

In the case where a separation functional layer is formed directly on a porous support member, defects, such as a pinhole, tend to occur in the separation functional layer. The occurrence of the defects in the separation functional layer deteriorates the performance, particularly the separation performance, of the separation membrane significantly.
In the case where an interlayer is disposed between a separation functional layer and a porous support member, the occurrence of the defects in the separation functional layer tends to be inhibited at the time of producing the separation functional layer. However, a separation membrane including an interlayer tends to decrease a flux of a permeation fluid permeating through the separation membrane.
Therefore, the present invention is intended to provide a separation membrane that allows a separation functional layer to have less defects and that inhibits a flux of a permeation fluid from decreasing.

Solution to Problem

The present invention provides a separation membrane including a separation functional layer, an interlayer, and a porous support member in this order in a stacking direction, wherein

the interlayer has a thickness of 0.1 μm to 2.5 μm, and
a total value of the thickness of the interlayer and a thickness of the separation functional layer is less than 4.0 μm.

The present invention further provides a separation membrane including a separation functional layer, an interlayer, and a porous support member in this order in a stacking direction, wherein

the interlayer contains a polymer compound, and
a distance Ra between a Hansen solubility parameter of the polymer compound and a Hansen solubility parameter of $H_2O$ is less than 19 $MPa^{1/2}$.

Advantageous Effects of Invention

The present invention can provide a separation membrane that allows a separation functional layer to have less defects and that inhibits a flux of a permeation fluid from decreasing.

BRIEF DESCRIPTION OF DRAWINGS

FIG. 1 is a cross-sectional view illustrating schematically a separation membrane according to one embodiment of the present invention.

FIG. 2 is a schematic cross-sectional view of a membrane separation device provided with the separation membrane of the present invention.

FIG. 3 is a perspective view illustrating schematically a modification of the membrane separation device provided with the separation membrane of the present invention.

DESCRIPTION OF EMBODIMENTS

According to one embodiment of the present invention, the interlayer contains a polymer compound, and a distance Ra between a Hansen solubility parameter of the polymer compound and a Hansen solubility parameter of $H_2O$ is less than 19 $MPa^{1/2}$.

According to one embodiment of the present invention, the above-mentioned polymer compound contains at least one selected from the group consisting of polyether block amide, polyvinyl alcohol, polyether, and polyurethane.

According to one embodiment of the present invention, the above-mentioned polymer compound contains polyether block amide.

According to one embodiment of the present invention, the separation functional layer contains polyimide.

According to one embodiment of the present invention, the above-mentioned polyimide includes a structural unit represented by formula (1) below:

[Chemical Formula 1]

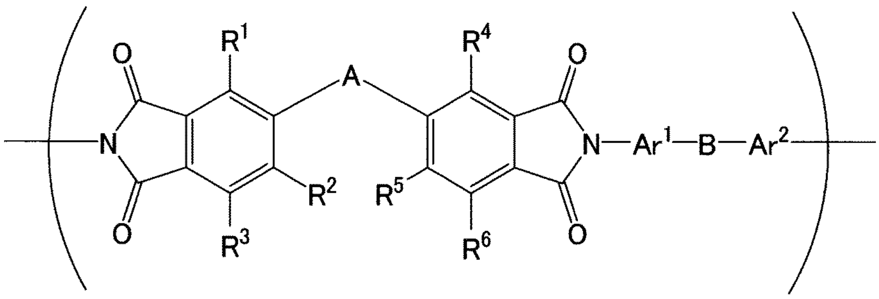

(1)

where A is a linking group having a solubility parameter, in accordance with a Fedors method, of more than 5.0 $(cal/cm^3)^{1/2}$; B is a linking group having a solubility parameter, in accordance with the Fedors method, of more than 8.56 $(cal/cm^3)^{1/2}$; $R^1$ to $R^6$ each are independently a hydrogen atom, a halogen atom, a hydroxy group, a sulfonic group, an alkoxy group having 1 to 30 carbon atoms, or a hydrocarbon group having 1 to 30 carbon atoms; $Ar^1$ and $Ar^2$ each are a divalent aromatic group; and $Ar^1$ and $Ar^2$ each are represented by formula (2) below when $Ar^1$ and $Ar^2$ each are a phenylene group that may have a substituent;

[Chemical Formula 2]

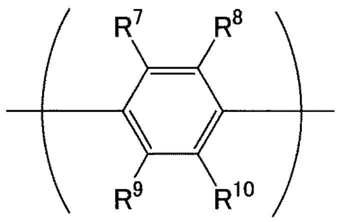

(2)

where $R^7$ to $R^{10}$ each are independently a hydrogen atom, a halogen atom, a hydroxy group, a sulfonic group, an alkoxy group having 1 to 30 carbon atoms, or a hydrocarbon group having 1 to 30 carbon atoms.

According to one embodiment of the present invention, the separation functional layer includes a matrix and a

filler dispersed in the matrix.

According to one embodiment of the present invention, the thickness of the separation functional layer is 0.1 μm to 2.5 μm.

According to one embodiment of the present invention, the separation membrane is used for separating water from a liquid mixture containing an alcohol and water.

According to one embodiment of the present invention, when, in a state in which a liquid mixture composed of ethanol and water is in contact with one surface of the separation membrane, a space adjacent to an other surface of the separation membrane is decompressed, a flux of the water permeating through the separation membrane is 0.40 $kg/m^2/hr$ or more. A concentration of the ethanol in the liquid mixture is 50 vol% when measured with a temperature of the liquid mixture at 20°C, the liquid mixture in contact with the separation membrane has a temperature of 60°C, and the space adjacent to the other surface of the separation membrane is decompressed in such a manner that a pressure in the space is lower than an atmospheric pressure in a measurement environment by 100 kPa.

According to one embodiment of the present invention, the separation membrane has a separation factor $\alpha$ of 20 or more for water with respect to ethanol. In a state in which a liquid mixture composed of ethanol and water is in contact with one surface of the separation membrane, the separation factor $\alpha$ is measured by decompressing a space adjacent to an other surface of the separation membrane. A concentration of the ethanol in the liquid mixture is 50 vol% when measured with a temperature of the liquid mixture at 20°C, the liquid mixture in contact with the separation membrane has a temperature of 60°C, and the space adjacent to the other surface of the separation membrane is decompressed in such a manner that a pressure in the space is lower than an atmospheric pressure in a measurement environment by 100 kPa.

Hereinafter, the present invention will be described in detail. The following description is not intended to limit the present invention to specific embodiments.

(Embodiment of separation membrane)

As shown in FIG. 1, a separation membrane 10 of the present embodiment includes a separation functional layer 1, an interlayer 2, and a porous support member 3 in this order in a stacking direction. The separation functional layer 1 allows, for example, water contained in a liquid mixture to permeate therethrough preferentially or selectively. The interlayer 2 is, for example, in direct contact with each of the separation functional layer 1 and the porous support member 3.

In the present embodiment, the interlayer 2 has a thickness of 0.1 μm to 2.5 μm. The thickness of the interlayer 2 is preferably 2.3 μm or less, more preferably 2.0 μm or less, still more preferably 1.5 μm or less, and particularly preferably 1.0 μm or less. The thickness of the interlayer 2 may be 0.5 μm or more. The thickness of the interlayer 2 can be determined by the following method, for example. First, a cross-section of the separation membrane 10 is observed with a scanning electron microscope. Using an electron microscope image obtained, a distance between a pair of principal surfaces, of the interlayer 2, that face each other is measured at a plurality of arbitrary points (at least three points). An average of the obtained values can be assumed as the thickness of the interlayer 2. In the present description, the term "principal surface" means a surface, of the interlayer 2, that has a largest area.

Furthermore, in the present embodiment, a total value T of the thickness of the interlayer 2 and a thickness of the separation functional layer 1 is less than 4.0 μm. The thickness of the separation functional layer 1 is not particularly limited as long as the total value T is less than 4.0 μm. The thickness of the separation functional layer 1 is 0.1 μm to 2.5 μm, for example, and it is preferably 2.3 μm or less, more preferably 2.0 μm or less, still more preferably 1.8 μm or less, and particularly preferably 1.5 μm or less. The thickness of the separation functional layer 1 may be 0.5 μm or more. The thickness of the separation functional layer 1 can be determined by the method mentioned above for the interlayer 2.

The total value T of the thickness of the interlayer 2 and the thickness of the separation functional layer 1 is preferably 3.5 μm or less, more preferably 3.3 μm or less, still more preferably 3.0 μm or less, particularly preferably 2.8 μm or less, and especially preferably 2.5 μm or less. The lower limit of the total value T is not particularly limited and it is 0.5 μm, for example, and it is preferably 1.0 μm and more preferably 1.5 μm.

A ratio R of the thickness of the separation functional layer 1 with respect to the thickness of the interlayer 2 is not particularly limited and it is 10 or less, for example, and it is preferably 5.0 or less, more preferably 3.0 or less, still more preferably 2.0 or less, and particularly preferably 1.0 or less. The lower limit of the ratio R is not particularly limited, and it is 0.1, for example. It may be 0.3, 0.5, or 0.6 in some cases.

As for conventional separation membranes, it was common to adjust a thickness of an interlayer to be relatively large from the viewpoint of inhibiting sufficiently the occurrence of defects at the time of production. As far as the present inventors are aware, no separation membranes with an interlayer having a thickness adjusted to about 2.5 μm or less have been known until now.

(Separation functional layer)

The separation functional layer 1 has a matrix 4 and a filler 5, for example. The filler 5 is dispersed in the matrix 4 and is buried in the matrix 4. In the embodiment shown in FIG. 1, all particles of the filler 5 are spaced apart from each other. The filler 5 may be condensed partially. The separation functional layer 1 may not include the filler 5.

Preferably, the matrix 4 contains polyimide. As the polyimide contained in the matrix 4, polyimide (P) including a structural unit represented by formula (1) below can be mentioned, for example.

[Chemical Formula 3]

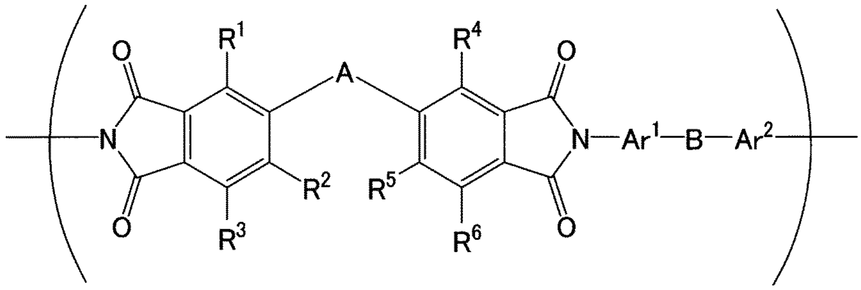

(1)

In the formula (1), A is, for example, a linking group having a solubility parameter, in accordance with a Fedors method, of more than 5.0 $(cal/cm^3)^{1/2}$. In the present description, the "solubility parameter in accordance with a Fedors method" is also referred to as an SP value. The "solubility parameter in accordance with a Fedors method" can be calculated by the following formula. It should be noted that in this formula, δi is the SP value of an atom or atomic group of an i component. Δei is an evaporation energy of the atom or atomic group of the i component. Δvi is a molar volume of the atom or atomic group of the i component.

$$\delta i[(cal/cm^3)^{1/2}] = (\Delta ei/\Delta vi)^{1/2}$$

The detail of the "solubility parameter in accordance with a Fedors method" is disclosed, for example, in "Polymer Engineering and Science" written by Robert F. Fedors, the year 1974, volume no. 14, the second issue, P. 147-154.

When the SP value of A is more than 5.0 $(cal/cm^3)^{1/2}$, water tends to penetrate into the separation functional layer 1 easily. The SP value of A is preferably 8.5 $(cal/cm^3)^{1/2}$ or more, more preferably 11.0 $(cal/cm^3)^{1/2}$ or more, and still more preferably 12.0 $(cal/cm^3)^{1/2}$ or more. The upper limit of the SP value of A is not particularly limited, and it may be 30.0 $(cal/cm^3)^{1/2}$, for example. Preferable examples of the SP value of A include 12.0 $(cal/cm^3)^{1/2}$ and 12.68 $(cal/cm^3)^{1/2}$.

A includes, for example, at least one selected from the group consisting of an oxygen atom, a nitrogen atom, a sulfur atom, and a silicon atom. Preferably, A includes at least one selected from the group consisting of an oxygen atom and a nitrogen atom. Particularly preferably, A includes an oxygen atom. A includes, for example, at least one functional group selected from the group consisting of an ether group, an ester group, a ketone group, a hydroxy group, an amide group, a thioether group, and a sulfonyl group. Preferably, A includes at least one selected from the group consisting of an ether group and an ester group.

A may include another group, such as a hydrocarbon group, besides the above-mentioned functional groups. The number of carbon atoms that the hydrocarbon group has is not particularly limited, and it is 1 to 15, for example. The number of carbon atoms may be 1 to 3, or may be 6 to 15. The valence of the hydrocarbon group is not particularly limited, either. Preferably, the hydrocarbon group is a divalent hydrocarbon group. Examples of the divalent hydrocarbon group include a methylene group, an ethylene group, a propane-1,3-diyl group, a propane-2,2-diyl group, a butane-1,4-diyl group, a pentane-1,5-diyl group, a 2,2-dimethylpropane-1,3-diyl group, a 1,4-phenylene group, a 2,5-di-tert-butyl-1,4-phenylene group, a 1-methyl-1,1-ethanediylbis(1,4-phenylene) group, and a biphenyl-4,4'-diyl group. Furthermore, at least one hydrogen atom included in these hydrocarbon groups may be substituted by a halogen atom.

A is a linking group represented by, for example, a general formula $-O-R^{19}-O-$ or a general formula $-COO-R^{20}-OOC-$. As stated herein, $R^{19}$ and $R^{20}$ each are a divalent hydrocarbon group having 1 to 15 carbon atoms. As the divalent hydrocarbon group, the divalent hydrocarbon groups stated above can be mentioned.

A may not include the above-mentioned functional groups. Examples of such A include an alkylene group. The number of carbon atoms that the alkylene group has is not particularly limited, and it may be 1 to 15, for example, and it may be 1 to 5. The alkylene group may be branched, but preferably it is linear. A part of hydrogen atoms included in

the alkylene group may be substituted by a halogen atom. However, it is preferable that the alkylene group be an alkylene group without the substitution, that is, a linear or branched alkylene group.

In the formula (1), the number of atoms constituting a bonding chain, among bonding chains that bond two phthalimide structures linked to each other by A, that is composed of a least number of atoms is 2 or more, for example, and it is preferably 4 or more, and more preferably 6 to 11. In the present description, the bonding chain composed of a least number of atoms is also referred to as a "shortest bonding chain". For example, in the case where A is an o-phenylene group, the number of atoms constituting a shortest bonding chain that bonds two phthalimide structures linked to each other by A is 2. In the case where A is a p-phenylene group, the number of atoms constituting a shortest bonding chain that bonds two phthalimide structures linked to each other by A is 4.

A may be one of the linking groups 1 to 26 shown in Tables 1 and 2 below. Tables 1 and 2 show the chemical structure, the SP value, and the number of atoms constituting a shortest bonding chain of each of the linking groups 1 to 26. A is preferably the linking group 11 or the linking group 18, and particularly preferably the linking group 18. In the case where A is the linking group 11 or the linking group 18, the polyimide (P) is easily dissolved in a polar organic solvent, such as N-methyl-2-pyrrolidone (NMP) and 1,3-dioxolane, and is easily adopted in a method desirable for manufacturing the separation functional layer 1.

[Table 1]

| | -A- | SP value [$(cal/cm^3)^{1/2}$] | The number of atoms constituting shortest bonding chain |
|---|---|---|---|
| 1 | $-CF_2-$ | 6.66 | 1 |
| 2 | $-CHC(CH_3)_3-$ | 7.52 | 1 |
| 3 | $-CH_2-$ | 8.56 | 1 |
| 4 | $-(CH_2)_5-$ | 8.56 | 5 |
| 5 | $-O-CH_2-C(CH_3)_2-CH_2-O-$ | 8.65 | 5 |
| 6 | $-O-(CH_2)_5-O-$ | 9.23 | 7 |
| 7 | $-O-(CH_2)_4-O-$ | 9.37 | 6 |
| 8 | 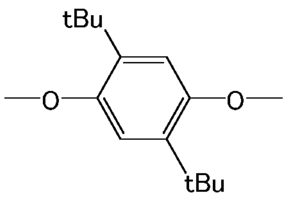 | 9.51 | 6 |
| 9 | 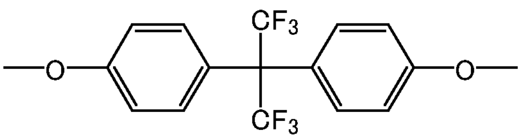 | 9.62 | 11 |
| 10 | $-O-CH_2-O-$ | 10.83 | 3 |
| 11 | | 11.02 | 11 |
| 12 | | 11.52 | 8 |
| 13 | | 12.00 | 7 |
| 14 | | 12.25 | 10 |
| 15 | | 12.29 | 11 |

[Table 2]

| | -A- | SP value [$(cal/cm^3)^{1/2}$] | The number of atoms constituting shortest bonding chain |
|---|---|---|---|
| 16 | 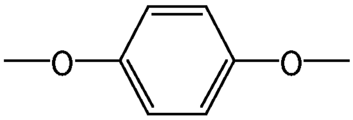 | 12.40 | 6 |
| 17 | -$SO_2$- | 12.47 | 1 |
| 18 | 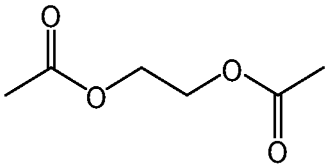 | 12.68 | 6 |
| 19 | 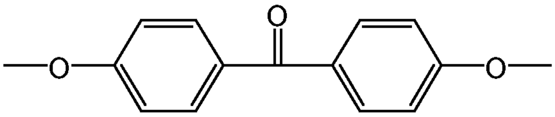 | 13.06 | 11 |
| 20 | 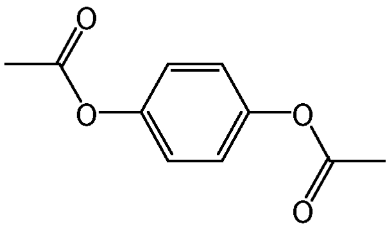 | 13.55 | 8 |
| 21 | -O- | 14.51 | 1 |
| 22 | -S- | 16.79 | 1 |
| 23 | 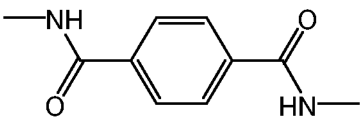 | 18.19 | 8 |
| 24 | -CO- | 19.60 | 1 |
| 25 | 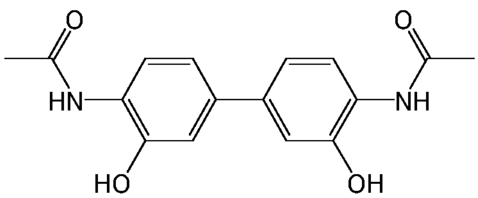 | 20.74 | 12 |
| 26 | -CONH- | 29.02 | 2 |

In the formula (1), B is, for example, a linking group having an SP value more than 8.56 $(cal/cm^3)^{1/2}$. Water tends to penetrate into the separation functional layer 1 easily when the SP value of the linking group B is more than 8.56 $(cal/cm^3)^{1/2}$. The SP value of B is preferably 9.0 $(cal/cm^3)^{1/2}$ or more, more preferably 11.0 $(cal/cm^3)^{1/2}$ or more, still more preferably 12.0 $(cal/cm^3)^{1/2}$ or more, and particularly preferably 14.0 $(cal/cm^3)^{1/2}$ or more. The upper limit of the SP value of B is not particularly limited, and it may be 30.0 $(cal/cm^3)^{1/2}$, for example. Preferable examples of the SP value of B include 14.0 $(cal/cm^3)^{1/2}$ and 14.51 $(cal/cm^3)^{1/2}$.

B includes, for example, at least one selected from the group consisting of an oxygen atom, a nitrogen atom, a sulfur atom, and a silicon atom. Preferably, B includes at least one selected from the group consisting of an oxygen atom and a nitrogen atom. Particularly preferably, B includes an oxygen atom. B includes, for example, at least one

functional group selected from the group consisting of an ether group, an ester group, a ketone group, a hydroxy group, an amide group, a thioether group, and a sulfonyl group. Preferably, B includes an ether group.

B may include another group, such as a hydrocarbon group, besides the above-mentioned functional groups. As the hydrocarbon group, the hydrocarbon groups stated above for A can be mentioned. B may be identical to or different from A.

In the formula (1), the number of atoms constituting a bonding chain (a shortest bonding chain), among bonding chains that bond $Ar^1$ and $Ar^2$ linked to each other by B, that is composed of a least number of atoms is 1 or more, for example. The upper limit of the number of atoms constituting the shortest bonding chain is not particularly limited, and it is 12, for example. Preferably, the number of atoms constituting the shortest bonding chain is 1.

B may be one of the linking groups 5 to 26 shown in the above-mentioned Tables 1 and 2. B is preferably the linking group 9, the linking group 16, or the linking group 21, and particularly preferably the linking group 21.

In the formula (1), $R^1$ to $R^6$ each are independently a hydrogen atom, a halogen atom, a hydroxy group, a sulfonic group, an alkoxy group having 1 to 30 carbon atoms, or a hydrocarbon group having 1 to 30 carbon atoms. Preferably, $R^1$ to $R^6$ each are a hydrogen atom. The alkoxy group or the hydrocarbon group as $R^1$ to $R^6$ may be either linear or branched. The number of carbon atoms that the alkoxy group or the hydrocarbon group has is preferably 1 to 20, more preferably 1 to 10, and particularly preferably 1 to 5. Examples of the alkoxy group include a methoxy group, an ethoxy group, and a propoxy group. Examples of the hydrocarbon group include a methyl group, an ethyl group, and a propyl group. At least one hydrogen atom included in the alkoxy group or the hydrocarbon group may be substituted by a halogen atom.

$R^2$ and $R^3$ as well as $R^5$ and $R^6$ may be bond to each other to form a ring structure. The ring structure is a benzene ring, for example.

In the formula (1), $Ar^1$ and $Ar^2$ each are a divalent aromatic group. The divalent aromatic group includes an aromatic ring. In the formula (1), it is preferable that a nitrogen atom in a phthalimide structure be bonded directly to the aromatic ring included in $Ar^1$, or the aromatic ring included in $Ar^2$. In the formula (1), B may be bonded directly to both of the aromatic ring included in $Ar^1$ and the aromatic ring included in $Ar^2$.

In $Ar^1$ and $Ar^2$, it is preferable that the aromatic ring be composed of a carbon atom. It should be noted that the aromatic ring may be a heteroaromatic ring including a hetero atom such as an oxygen atom, a nitrogen atom, and a sulfur atom. The aromatic ring may be polycyclic, but preferably it is monocyclic. The number of carbon atoms that the aromatic ring has is not particularly limited, and it may be 4 to 14, for example, and it may be 6 to 10. Examples of the aromatic ring include a benzene ring, a naphthalene ring, an anthracene ring, a phenanthrene ring, a furan ring, a pyrrole ring, a pyridine ring, and a thiophene ring.

In $Ar^1$ and $Ar^2$, the aromatic ring may or may not have a substituent. Examples of the substituent of the aromatic ring include a halogen atom, a hydroxy group, a sulfonic group, an alkoxy group having 1 to 30 carbon atoms, and a hydrocarbon group having 1 to 30 carbon atoms. As the alkoxy group and the hydrocarbon group, the alkoxy groups and the hydrocarbon groups stated above for $R^1$ to $R^6$ can be mentioned. In the case where the aromatic ring has a plurality of substituents, the substituents may be identical to or different from each other.

Preferably, $Ar^1$ and $Ar^2$ each are a phenylene group that may have a substituent, or a naphthalenediyl group that may have a substituent. And $Ar^1$ and $Ar^2$ each may be represented by formula (2) below when $Ar^1$ and $Ar^2$ each are a phenylene group that may have a substituent.

[Chemical Formula 4]

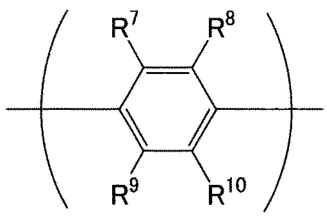

(2)

In the formula (2), $R^7$ to $R^{10}$ each are independently a hydrogen atom, a halogen atom, a hydroxy group, a sulfonic group, an alkoxy group having 1to 30 carbon atoms, or a hydrocarbon group having 1 to 30 carbon atoms. As the alkoxy group and the hydrocarbon group, the alkoxy groups and the hydrocarbon groups stated above for $R^1$ to $R^6$ can be mentioned. Preferably, $R^7$ to $R^{10}$ each are a hydrogen atom. The formula (2) represents a p-phenylene structure. Polyimide having the p-phenylene structure is less bulky three-dimensionally than polyimide having an o-phenylene structure or an m-phenylene structure, and is suitable for enhancing the separation performance of the separation membrane.

The naphthalenediyl group, as $Ar^1$ and $Ar^2$, that may have a substituent has a naphthalene-2,6-diyl structure,

a naphthalene-1,4-diyl structure, a naphthalene-1,5-diyl structure, or a naphthalene-1,8-diyl structure, for example. The naphthalenediyl group that may have a substituent is a naphthalene-2,6-diyl group, for example.

$Ar^1$ and $Ar^2$ may be identical to or different from each other. For example, there may be a case in which $Ar^1$ is a naphthalene-2,6-diyl group while $Ar^2$ is a p-phenylene group.

In the polyimide (P), the structural unit represented by the formula (1) is preferably a structural unit represented by formula (3) below.

[Chemical Formula 5]

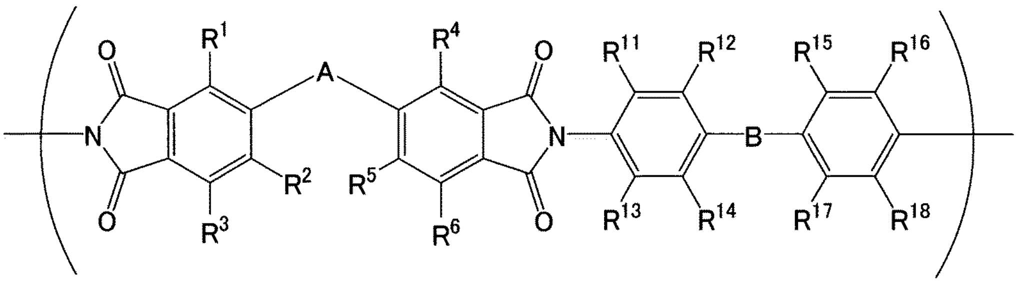

(3)

In the formula (3), A, B, and $R^1$ to $R^6$ are identical to those mentioned above for the formula (1). $R^{11}$ to $R^{18}$ each are independently a hydrogen atom, a halogen atom, a hydroxy group, a sulfonic group, an alkoxy group having 1 to 30 carbon atoms, and a hydrocarbon group having 1 to 30 carbon atoms. As the alkoxy group and the hydrocarbon group, the alkoxy groups and the hydrocarbon groups stated above for $R^1$ to $R^6$ can be mentioned. $R^{11}$ to $R^{18}$ each are preferably a hydrogen atom.

A content of the structural unit represented by the formula (1) in the polyimide (P) is 50 mol% or more, for example, and it is preferably 60 mol% or more, more preferably 70 mol% or more, still more preferably 80 mol% or more, and particularly preferably 90 mol% or more. The content of the structural unit represented by the formula (1) may be 100 mol%.

The structural unit represented by the formula (1) can be obtained by a reaction between tetracarboxylic dianhydride (C) represented by formula (4) below and a diamine compound (D) represented by formula (5) below. In the formula (4), A as well as $R^1$ to $R^6$ are identical to those in the formula (1). In the formula (5), B, $Ar^1$, and $Ar^2$ are identical to those in the formula (1).

[Chemical Formula 6]

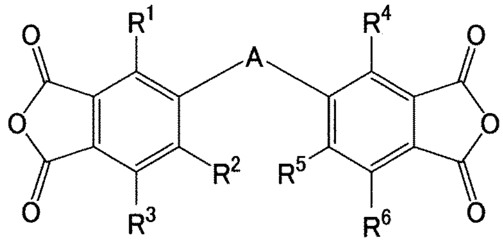

(4)

[Chemical Formula 7] $H_2N-Ar^1-B-Ar^2-NH_2$ (5)

The polyimide (P) may include a structural unit derived from an other tetracarboxylic dianhydride that is different from the tetracarboxylic dianhydride (C). The other tetracarboxylic dianhydride is not particularly limited, and a known tetracarboxylic dianhydride can be used. Examples of the other tetracarboxylic dianhydride include pyromellitic dianhydride, and 4,4'-(hexafluoroisopropylidene)diphthalic anhydride.

In the polyimide (P), a ratio P1 of a structural unit(s) derived from the tetracarboxylic dianhydride (C) with respect to structural units derived from all the tetracarboxylic dianhydrides is 50 mol% or more, for example, and it is preferably 70 mol% or more, and more preferably 90 mol% or more. The ratio P1 may be 100 mol%.

The polyimide (P) may include a structural unit derived from an other diamine compound that is different from the diamine compound (D). The other diamine compound is not particularly limited and a known diamine compound can be used. Examples of the other diamine compound include phenylenediamine, diaminobenzoic acid, diaminobiphenyl,

and diaminodiphenylmethane. For example, the polyimide (P) may include a structural unit derived from diaminobenzoic acid (such as 3,5-diaminobenzoic acid). The polyimide (P) including the structural unit derived from diaminobenzoic acid is suitable for increasing a flux of the water permeating through the separation membrane 10.

In the polyimide (P), a ratio P2 of a structural unit(s) derived from the diamine compound (D) with respect to structural units derived from all the diamine compounds is 50 mol% or more, for example, and it is preferably 70 mol% or more, and more preferably 90 mol% or more. The ratio P2 may be 100 mol%.

The polyimide (P) can be produced by the following method, for example. First, the diamine compound (D) is dissolved in a solvent to obtain a solution. Examples of the solvent include a polar organic solvent such as N-methyl-2-pyrrolidone (NMP) and 1,3-dioxolane. Next, the tetracarboxylic dianhydride (C) is added gradually to the obtained solution. This makes the tetracarboxylic dianhydride (C) and the diamine compound (D) react with each other to form polyamide acid. The addition of the tetracarboxylic dianhydride (C) is carried out under the conditions, for example, that the solution is being stirred for 3 to 20 hours at a temperature equal to or lower than a room temperature (25°C).

Subsequently, the polyamide acid is imidized to obtain the polyimide (P). Examples of the imidization method include a chemical imidization method and a thermal imidization method. The chemical imidization method is a method for imidizing polyamide acid using a dehydration condensation agent. The chemical imidization method may be carried out under a room temperature condition or a heat condition. Examples of the dehydration condensation agent include acetic anhydride, pyridine, and triethylamine. The thermal imidization method is a method for imidizing polyamide acid by a heat treatment. The heat treatment is carried out at a temperature of 180°C or higher, for example.

A content of the polyimide (P) in the matrix 4 is 50 wt% or more, for example, and it is preferably 60 wt% or more, more preferably 70 wt% or more, still more preferably 80 wt% or more, and particularly preferably 90 wt% or more. The matrix 4 is composed substantially of the polyimide (P), for example.

A content of the matrix 4 in the separation functional layer 1 is 70 wt% or more, for example. The upper limit of the content of the matrix 4 is not particularly limited, and it may be 99 wt% or 95 wt%.

The filler 5 has hydrophilicity and is porous, for example. The filler 5 as just mentioned is suitable for increasing the flux of the water permeating through the separation membrane 10 without deteriorating the separation performance of the separation membrane 10 significantly. The filler 5 includes, for example, at least one selected from the group consisting of zeolite and a metal organic framework (MOF). From the viewpoint of durability against water, it is preferable that the filler 5 include the metal organic framework. As the zeolite, molecular sieves 3A, 4A, 5A, and 13X can be mentioned, for example.

The metal organic framework is also referred to as a porous coordination polymer (PCP). The metal organic framework includes a metal ion and an organic ligand, for example. Examples of the metal ion include a Co ion, an Ni ion, a Zn ion, an Mg ion, a Zr ion, and a Cu ion. The organic ligand may not have a polar group, but preferably it has a polar group. Examples of the polar group include an aldehyde group, an amino group, an amide group, a hydroxy group, a carboxyl group, and a nitro group. The organic ligand includes an aromatic ring, for example. Examples of the aromatic ring included in the organic ligand include a benzene ring and an imidazole ring. Examples of the organic ligand include 2-hydroxymethylimidazole, 2-formylimidazole, terephthalic acid, 2-hydroxyterephthalic acid, 2,5-dihydroxyterephthalic acid, and 2-aminoterephthalic acid.

Examples of the metal organic framework include ZIF-90, ZIF-91, UiO-66, UiO-66-$NH_2$, UiO-66-OH, UiO-66-$NO_2$, UiO-66-COOH, HKUST-1, and MOF-74 (M = Co, Ni, Zn, Mg, etc.). From the viewpoint of increasing the flux of the water permeating through the separation membrane 10, it is preferable that the metal organic framework include at least one selected from the group consisting of ZIF-90, UiO-66-$NH_2$, UiO-66-OH, UiO-66-$NO_2$, UiO-66-COOH, and MOF-74 (Ni). More preferably, the metal organic framework includes UiO-66-COOH.

As the filler 5, a filler that can adsorb water is suitable. In particular, a filler that adsorbs water better than it adsorbs ethanol is suitable as the filler 5. A ratio R1 of an adsorption amount Q2 of water adsorbed by the filler 5 under water vapor at 25°C and 3.2 kPa with respect to an adsorption amount Q1 of ethanol adsorbed by the filler 5 under an ethanol atmosphere at 25°C and 7.4 kPa is 2.0 or more, for example, and is preferably 3.0 or more. The upper limit of the ratio R1 is not particularly limited, and it is 5.0, for example. The ratio R1 is used as an index of hydrophilicity of the filler 5 in some cases. In the present description, the term "adsorption amount" means a value obtained by converting a volume of a gas that 1 g of the filler 5 has adsorbed into a volume of the gas in a standard state (298 K, 1 atm).

The adsorption amount Q1 of ethanol adsorbed by the filler 5 can be determined by the following method. First, this filler 5 is pretreated by being heated under a decompressed atmosphere. The pretreatment may be carried out under a vacuum atmosphere. The pretreatment is carried out at a temperature of 100°C or higher, for example. The duration of the pretreatment is not particularly limited, and it is 1 hour or longer, for example. Next, the filler 5 is placed in a known vapor adsorption amount measuring apparatus such as BELSORP-maxII available from MicrotracBEL Corp. Next, gaseous ethanol is introduced into the measuring apparatus at a measurement temperature of 25°C. The gaseous ethanol introduced is adsorbed by the filler 5. The gaseous ethanol is introduced until the pressure of the ethanol in the measuring apparatus reaches 7.4 kPa. The pressure of 7.4 kPa is equivalent to an equilibrium vapor pressure (a saturation vapor pressure) of ethanol at 25°C. The adsorption of the ethanol by the filler 5 is confirmed to have reached a state of

equilibrium, and then the adsorption amount of the ethanol adsorbed by the filler 5 is determined. The fact that the adsorption of the ethanol by the filler 5 has reached a state of equilibrium can be confirmed by a change in the pressure of the ethanol inside the measuring apparatus. For example, when the change in the pressure of the ethanol inside the measuring apparatus is 40 Pa or less for 500 seconds, the adsorption of the ethanol by the filler 5 can be considered to have reached a state of equilibrium. The adsorption amount of the ethanol that is determined by the above-mentioned method can be assumed as the adsorption amount Q1.

The adsorption amount Q2 of water adsorbed by the filler 5 can be determined by the following method. First, the filler 5 is subject to the pretreatment mentioned above. The filler 5 is placed in a vapor adsorption amount measuring apparatus. Next, water vapor is introduced into the measuring apparatus at a measurement temperature of 25°C. The water vapor is introduced until the pressure of the water vapor in the measuring apparatus reaches 3.2 kPa. The pressure of 3.2 kPa is equivalent to an equilibrium vapor pressure of water at 25°C. The adsorption of the water by the filler 5 is confirmed to have reached a state of equilibrium, and then the adsorption amount of the water adsorbed by the filler 5 is determined. The determined adsorption amount of the water can be assumed as the adsorption amount Q2.

The adsorption amount Q1 of ethanol adsorbed by the filler 5 is 200 $cm^3/g$ or less, for example. The lower limit of the adsorption amount Q1 is not particularly limited, and it may be 90 $cm^3/g$ or 100 $cm^3/g$. The adsorption amount Q2 of water adsorbed by the filler 5 is 300 $cm^3/g$ or more, for example, and it may be 350 $cm^3/g$ or more, 450 $cm^3/g$ or more, 500 $cm^3/g$ or more, or 550 $cm^3/g$ or more in some cases. The upper limit of the adsorption amount Q2 is not particularly limited, and it is 800 $cm^3/g$, for example.

The filler 5 may be a filler in which a ratio R2 of a BET (Brunauer-Emmett-Teller) specific surface area S2 obtained by water vapor adsorption with respect to a BET specific surface area S1 obtained by nitrogen gas adsorption is 0.005 or more. The ratio R2 is used as an index of hydrophilicity of the filler 5 in some cases. In the filler 5, the ratio R2 is 0.01 or more, for example, and it is preferably 0.1 or more, more preferably 0.2 or more, and still more preferably 0.3 or more. The ratio R2 may be 25 or less, 10 or less, 1.0 or less, or 0.6 or less.

In the filler 5, the BET specific surface area S1 obtained by nitrogen gas adsorption is 1500 $m^2/g$ or less, for example, and it is preferably 1000 $m^2/g$ or less. It may be 900 $m^2/g$ or less in some cases. The specific surface area S1 may be 30 $m^2/g$ or more, or 400 $m^2/g$ or more. In the filler 5, the BET specific surface area S2 obtained by water vapor adsorption is 10 $m^2/g$ or more, for example, and it is preferably 100 $m^2/g$ or more, and more preferably 150 $m^2/g$ or more. It may be 200 $m^2/g$ or more in some cases. The specific surface area S2 may be 1000 $m^2/g$ or less, 600 $m^2/g$ or less, or 400 $m^2/g$ or less.

The filler 5 has a shape that is not particularly limited, and it is a particulate shape, for example. In the present description, the "particulate" is a shape such as a spherical shape, an elliptical shape, a flaky shape, and a fibrous shape. The filler 5 has an average particle diameter that is not particularly limited, and it is 5 nm to 10000 nm, for example. The average particle diameter of the filler 5 can be determined by the following method, for example. First, a cross section of the separation functional layer 1 is observed with a transmission electron microscope. On an electron microscope image obtained, an area of a particular particle of the filler 5 is calculated by image processing. A diameter of a circle having an area equal to the calculated area is assumed as a diameter of that particular particle (a diameter of a particle) of the filler 5. A particle diameter of each of an arbitrary number (at least 50) of particles of the filler 5 is calculated. An average of the calculated values is assumed as the average particle diameter of the filler 5.

A content of the filler 5 in the separation functional layer 1 may be 1 wt% or more, 5 wt% or more, 10 wt% or more, 15 wt% or more, or 20 wt% or more, for example. The content of the filler 5 in the separation functional layer 1 may be 30 wt% or less.

(Interlayer)

The interlayer 2 contains a polymer compound (E), for example. In the present embodiment, it is preferable that a distance Ra between a Hansen solubility parameter of the polymer compound (E) and a Hansen solubility parameter of $H_2O$ be less than 19 $MPa^{1/2}$. The interlayer 2 containing the polymer compound (E) as just mentioned is suitable for inhibiting the flux of the water permeating through the separation membrane 10 from decreasing. Furthermore, the polymer compound (E) is suitable for inhibiting the occurrence of defects in the interlayer 2 at the time of producing the interlayer 2 while adjusting the thickness of the interlayer 2 to 2.5 μm or less. The interlayer 2 containing the polymer compound (E) also has an advantage that the separation functional layer 1 containing polyimide and having a thickness of about 2.5 μm or less can be formed easily on a surface of the interlayer 2. It should be noted that the above-mentioned distance Ra may be 19 $MPa^{1/2}$ or more depending on a composition of the separation functional layer 1, the use of the separation membrane, etc.

That is, the present invention provides, from another aspect, the separation membrane 10 including the separation functional layer 1, the interlayer 2, and the porous support member 3 in this order in a stacking direction, wherein

the interlayer 2 contains the polymer compound (E), and

the distance Ra between the Hansen solubility parameter of the polymer compound (E) and the Hansen solubility parameter of $H_2O$ is less than 19 $MPa^{1/2}$.

The Hansen solubility parameter is a parameter obtained by dividing a solubility parameter introduced by Hildebrand into three components of a dispersion term $\delta D$, a polar term $\delta P$, and a hydrogen bond term $\delta H$. The details of the Hansen solubility parameter are disclosed in "Hansen Solubility Parameters; A Users Handbook" (CRC Press, 2007). The Hansen solubility parameter can be calculated by, for example, using a known software such as HSPiP.

The distance Ra between the Hansen solubility parameter of the polymer compound (E) and the Hansen solubility parameter of $H_2O$ can be calculated by formula (i) below. In the formula (i), $\delta D_1$, $\delta P_1$, and $\delta H_1$ are, respectively, a dispersion term ($MPa^{1/2}$), a polar term ($MPa^{1/2}$), and a hydrogen bond term ($MPa^{1/2}$) of the polymer compound (E). $\delta D_2$, $\delta P_2$, and $\delta H_2$ are respectively a dispersion term (18.1 $MPa^{1/2}$), a polar term (17.1 $MPa^{1/2}$), and a hydrogen bond term (16.9 $MPa^{1/2}$) of $H_2O$.

$$Ra = \{4 \times (\delta D_1 - \delta D_2)^2 + (\delta P_1 - \delta P_2)^2 + (\delta H_1 - \delta H_2)^2\}^{1/2} \quad (i)$$

The distance Ra between the Hansen solubility parameter of the polymer compound (E) and the Hansen solubility parameter of $H_2O$ is preferably 18 $MPa^{1/2}$ or less, more preferably 17 $MPa^{1/2}$ or less, still more preferably 16 $MPa^{1/2}$ or less, and particularly preferably 15 $MPa^{1/2}$ or less. From the viewpoint of inhibiting the polymer compound (E) from swelling with water when the water permeates through the separation membrane 10, the lower limit of the distance Ra is preferably 5 $MPa^{1/2}$, and more preferably 8 $MPa^{1/2}$. It may be 10 $MPa^{1/2}$ or 13 $MPa^{1/2}$ in some cases.

The polymer compound (E) contains, for example, at least one selected from the group consisting of polyether block amide, polyvinyl alcohol (PVA), polyether, and polyurethane. As the polyether, polyethylene glycol (PEG) can be mentioned, for example. From the viewpoint of allowing the separation functional layer 1 containing polyimide to be formed on a surface of the interlayer 2 easily, it is preferable that the polymer compound (E) include the polyether block amide. However, the polymer compound (E) may include silicone polymer, such as dimethylpolysiloxane, in some cases.

The polyether block amide is a block copolymer containing a polyether block PE and a polyamide block PA. The polyether block amide is represented by formula (6) below, for example.

[Chemical Formula 8]

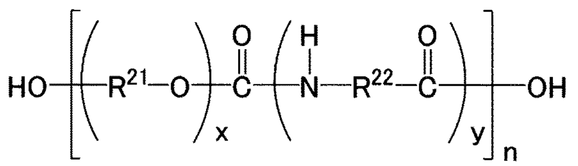

(6)

In the formula (6), $R^{21}$ is a divalent hydrocarbon group having 1 to 15 carbon atoms. As for $R^{21}$, the number of carbon atoms that the divalent hydrocarbon group has may be 1 to 10 or 1 to 5. As for $R^{21}$, the divalent hydrocarbon group is preferably an alkylene group that is linear or branched. Specific examples of $R^{21}$ are an ethylene group and a butane-1,4-diyl group. $R^{22}$ is a divalent hydrocarbon group having 1 to 20 carbon atoms. As for $R^{22}$, the number of carbon atoms that the divalent hydrocarbon group has may be 3 to 18, or 3 to 15. As for $R^{22}$, the divalent hydrocarbon group is preferably an alkylene group that is linear or branched. Specific examples of $R^{22}$ are a pentane-1,5-diyl group and an undecane-1,11-diyl group.

In the formula (6), a ratio (x:y) between x and y is 1:9 to 9:1, for example, and it is preferably 5:5 to 9:1, and more preferably 6:4 to 8:2. The letter n refers to an integer of 1 or more.

As specific examples of the polyether block amide, Pebax (registered trademark) 2533 and 1657 available from Arkema can be mentioned.

Table 3 below shows specific examples 1 to 5 of the polymer compound (E). Table 3 also shows the Hansen solubility parameter and the above-mentioned distance Ra of each of the specific examples 1 to 5.

[Table 3]

| | Polymer compound (E) | Structure | δD ($MPa^{1/2}$) | δP ($MPa^{1/2}$) | δH ($MPa^{1/2}$) | Distance Ra ($MPa^{1/2}$) |
|---|---|---|---|---|---|---|
| 1 | Pebax 2533 | 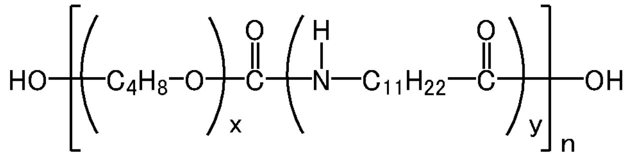 x:y=8:2 | 16.6 | 5.8 | 5.3 | 16.5 |
| 2 | Pebax 1657 | 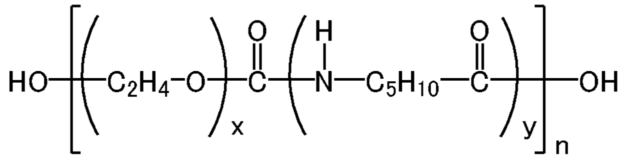 x:y=6:4 | 17.5 | 9.0 | 7.6 | 12.4 |
| 3 | PVA | 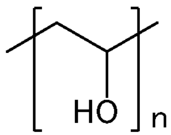 | 20.0 | 12.6 | 22.4 | 8.1 |
| 4 | PEG | 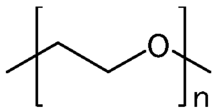 | 17.2 | 9.0 | 7.3 | 12.7 |
| 5 | Silicone (YSR3200) | 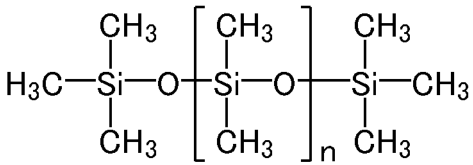 | 14.4 | 4.5 | 4.3 | 19.3 |

The interlayer 2 may contain the polymer compound (E), particularly the polyether block amide, as a main component, and a content thereof is 50 wt% or more, for example, and it is preferably 60 wt% or more, more preferably 70 wt% or more, still more preferably 80 wt% or more, and particularly preferably 90 wt% or more. Preferably, the interlayer 2 is composed substantially of the polymer compounds (E).

(Porous support member)

The porous support member 3 is not particularly limited as long as it can support the separation functional layer 1 and the interlayer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polycarbonate, polysulfone, polyether ether ketone, polyacrylonitrile, polyimide, and polyphenylene oxide; a metallic foam having an open cell or a closed cell; a polymer foam having an open cell or a closed cell; silica; porous glass; and a mesh screen. The porous support member 3 may be a combination of two or more of these materials.

The porous support member 3 has an average pore diameter of 0.01 to 0.4 μm, for example. The porous support member 3 has a thickness that is not particularly limited. It is 10 μm or more, for example, and it is preferably 20 μm or more, and more preferably 50 μm or more. The thickness of the porous support member 3 is 300 μm or less, for example, and it is preferably 200 μm or less, and more preferably 75 μm or less.

(Method for producing separation membrane)

The separation membrane 10 can be produced by the following method, for example. First, a coating liquid containing the polymer compound (E) is prepared. Examples of a solvent of the coating liquid include an organic solvent such as 2-propanol (IPA). A concentration of the polymer compound (E) in the coating liquid is not particularly limited, and it is 1 wt% to 10 wt%, for example, and it is preferably 3 wt% to 7wt%. In order to dissolve the polymer compound (E) in the solvent of the coating liquid, the solvent may be heated beforehand. The temperature at which the solvent is heated is not particularly limited as long as it is equal to or lower than a boiling point of the solvent, and it is 30°C to 80°C, for example. Next, the coating liquid is applied onto the porous support member 3 to obtain a coating. The coating is dried to form the interlayer 2. The thickness of the interlayer 2 can be adjusted by the concentration of the polymer compound (E) in the coating liquid and a thickness of the coating.

Next, a coating liquid containing the filler 5 and a material of the matrix 4 is prepared. As a solvent of the coating liquid, an organic solvent, such as 1,3-dioxolane, can be used. The coating liquid may be subject to ultrasonication in order to enhance the dispersibility of the filler 5 in the coating liquid. Next, the coating liquid is applied onto the interlayer 2 to obtain a coating. The coating is dried to form the separation functional layer 1. Thereby, the separation membrane 10 can be produced.

In the case where the matrix 4 contains polyimide, the material of the matrix 4 contained in the coating liquid may be polyamide acid. In this case, the separation functional layer 1 can be formed by imidizing the polyamide acid after applying the coating liquid onto the interlayer 2.

In order to form a thin separation functional layer, it can be considered to adjust a viscosity of a coating liquid for forming the separation functional layer to be relatively low, for example, to 10 mPa•s or less. A coating liquid including a filler tends to have a low viscosity. In the case where a coating liquid having a low viscosity is applied directly onto a porous support member, this coating liquid enters into the porous support member easily. The entry of the coating liquid into the porous support member makes it difficult for a coating to be formed uniformly on a surface of the porous support member, and defects tend to occur in the obtained separation functional layer. In addition, defects also tend to occur in the separation functional layer when a surface of the porous support member has a defect and a coating liquid for forming the separation functional layer is applied directly onto this surface.

In the present embodiment, the coating liquid for forming the separation functional layer 1 is applied not onto the porous support member 3 but onto the interlayer 2, and thus the coating liquid is unlikely to enter into the porous support member 3. Therefore, even in the cases where the coating liquid has a relatively low viscosity and where a surface of the porous support member 3 has a defect, it is possible to inhibit sufficiently defects from occurring in the separation functional layer 1. For example, in the present embodiment, the number of the defects in the separation functional layer 1 per 1000 $cm^2$ of a surface of the separation functional layer 1 is 10 or less, for example, and it is preferably five or less, more preferably two or less, and still more preferably zero.

(Characteristics of separation membrane)

In the separation membrane 10 of the present embodiment, the thickness of the interlayer 2 as well as the total

value T of the thickness of the interlayer 2 and the thickness of the separation functional layer 1 are adjusted properly. Thereby, the flux of the permeation fluid permeating through the separation membrane 10 is inhibited from decreasing. For example, when, in a state in which a liquid mixture composed of ethanol and water is in contact with one surface of the separation membrane 10, a space adjacent to an other surface of the separation membrane 10 is decompressed, a flux F of the water permeating through the separation membrane 10 is 0.30 $kg/m^2/hr$ or more, for example, and it is preferably 0.35 $kg/m^2/hr$ or more, more preferably 0.40 $kg/m^2/hr$ or more, still more preferably 0.45 $kg/m^2/hr$ or more, and particularly preferably 0.50 $kg/m^2/hr$ or more. The upper limit of the flux F of the water is not particularly limited, and it is 1.00 $kg/m^2/hr$, for example.

Specifically, the flux F of the water can be measured by the following method. First, in a state in which a liquid mixture composed of ethanol and water is in contact with one surface (a principal surface 11, on a side of the separation functional layer, of the separation membrane 10, for example) of the separation membrane 10, a space adjacent to an other surface (a principal surface 12, on a side of the porous support member, of the separation membrane 10, for example) of the separation membrane 10 is decompressed. Thereby, a permeation fluid that has permeated through the separation membrane 10 can be obtained. In the above-mentioned procedure, a concentration of the ethanol in the liquid mixture is 50 vol% (44 wt%) when measured with a temperature of the liquid mixture at 20°C. The liquid mixture in contact with the separation membrane 10 has a temperature of 60°C. The space adjacent to the other surface of the separation membrane 10 is decompressed in such a manner that a pressure in the space is lower than an atmospheric pressure in a measurement environment by 100 kPa. Next, a weight of the permeation fluid and a weight ratio of the water in the permeation fluid are measured. The flux F of the water can be determined based on the obtained results.

Under the above-mentioned measurement conditions of the flux F of the water, a separation factor $\alpha$ that the separation membrane 10 has for water with respect to ethanol is 20 or more, for example, and it is preferably 40 or more, and more preferably 45 or more. It may be 50 or more, 60 or more, or 65 or more in some cases. The upper limit of the separation factor $\alpha$ is not particularly limited, and it is 500, for example. The separation membrane 10 having the separation factor $\alpha$ that is 20 or more is sufficiently suitable to be used for separating water from a liquid mixture containing an alcohol and water.

The separation factor $\alpha$ can be calculated by the following formula. It should be noted that in the following formula, $X_A$ and $X_B$ are respectively a volume ratio of the water and a volume ratio of the alcohol in the liquid mixture. $Y_A$ and $Y_B$ are respectively the volume ratio of the water and the volume ratio of the alcohol in the permeation fluid that has permeated through the separation membrane 10.

$$\text{Separation factor } \alpha = (Y_A/Y_B)/(X_A/X_B)$$

The separation membrane 10 of the present embodiment is used for, for example, separating water from a liquid mixture containing an alcohol and water. In this use, the flux of the water permeating through the separation membrane 10 tends to be high. However, the use of the separation membrane 10 is not limited to the above-mentioned use of separating water from a liquid mixture.

(Embodiment of membrane separation device)

As shown in FIG. 2, a membrane separation device 100 of the present embodiment is provided with the separation membrane 10 and a tank 20. The tank 20 is provided with a first room 21 and a second room 22. The separation membrane 10 is disposed in the tank 20. In the tank 20, the separation membrane 10 separates the first room 21 from the second room 22. The tank 20 has a pair of wall surfaces, and the separation membrane 10 extends from one of them to the other.

The first room 21 has an inlet 21a and an outlet 21b. The second room 22 has an outlet 22a. The inlet 21a, the outlet 21b, and the outlet 22a each are an opening formed in the wall surfaces of the tank 20, for example.

Membrane separation using the membrane separation device 100 is carried out by the following method, for example. First, a liquid mixture 30 containing an alcohol and water is supplied into the first room 21 via the inlet 21a. This makes it possible to bring the liquid mixture 30 into contact with one surface of the separation membrane 10. The alcohol contained in the liquid mixture 30 is, for example, a lower alcohol that exhibits azeotropy with water. The alcohol is preferably ethanol, and it may be isopropyl alcohol (IPA). A concentration of the alcohol in the liquid mixture 30 is 10 wt% or more, for example, and it is preferably 20 wt% or more. The separation membrane 10 is particularly suitable for separating the water from the liquid mixture 30 containing the alcohol at a moderate concentration (20 wt% to 80 wt%, particularly 30 wt% to 70 wt%). It should be noted that the concentration of the alcohol in the liquid mixture 30 may be 80 wt% or more. The liquid mixture 30 may be composed substantially of the alcohol and water. A temperature of the liquid mixture 30 may be higher than a boiling point of the alcohol to be used. Preferably, the temperature is lower than the boiling point of the alcohol. The temperature of the liquid mixture 30 is 25°C or higher, for example, and it is preferably

40°C or higher, and more preferably 60°C or higher. The temperature of the liquid mixture 30 may be 75°C or lower.

Next, in a state in which the liquid mixture 30 is in contact with one surface of the separation membrane 10, a space adjacent to an other surface of the separation membrane 10 is decompressed. Specifically, an inside of the second room 22 is decompressed via the outlet 22a. The membrane separation device 100 may be further provided with a pump (not shown) for decompressing the inside of the second room 22. The second room 22 is decompressed in such a manner that a space in the second room 22 has a pressure lower than an atmospheric pressure in a measurement environment by 10 kPa or more, for example, and preferably by 50 kPa or more, and more preferably by 100 kPa or more.

Decompressing the inside of the second room 22 makes it possible to obtain, on a side of the other surface of the separation membrane 10, a permeation fluid 35 having a content of the water higher than a content of the water in the liquid mixture 30. That is, the permeation fluid 35 is supplied into the second room 22. The permeation fluid 35 contains the water as a main component, for example. The permeation fluid 35 may contain a small amount of the alcohol besides the water. The permeation fluid 35 may be a gas or a liquid. The permeation fluid 35 is discharged to an outside of the tank 20 via the outlet 22a.

The concentration of the alcohol in the liquid mixture 30 increases gradually from the inlet 21a toward the outlet 21b of the first room 21. The liquid mixture 30 (a concentrated fluid 36) processed in the first room 21 is discharged to the outside of the tank 20 via the outlet 21b.

The membrane separation device 100 of the present embodiment is used preferably for a pervaporation method. The membrane separation device 100 may be used for other membrane separation methods such as a vapor permeation method. That is, a mixture gas containing a gaseous alcohol and gaseous water may be used instead of the liquid mixture 30 in the membrane separation method mentioned above. The membrane separation device 100 of the present embodiment is suitable for a flow-type (continuous-type) membrane separation method. The membrane separation device 100 of the present embodiment may be used for a batch-type membrane separation method.

(Modification of membrane separation device)

As shown in FIG. 3, a membrane separation device 110 of the present embodiment is provided with a central tube 41 and a laminate 42. The laminate 42 includes the separation membrane 10. The membrane separation device 110 is a spiral membrane element.

The central tube 41 has a cylindrical shape. The central tube 41 has a surface with a plurality of pores formed therein to allow the permeation fluid 35 to flow into the central tube 41. Examples of a material of the central tube 41 include: a resin such as an acrylonitrile-butadiene-styrene copolymer (an ABS resin), a polyphenylene ether resin (a PPE resin), and a polysulfone resin (a PSF resin); and a metal such as stainless steel and titanium. The central tube 41 has an inner diameter in a range of 20 to 100 mm, for example.

The laminate 42 further includes a supply-side flow passage material 43 and a permeation-side flow passage material 44 besides the separation membrane 10. The laminate 42 is wound around a circumference of the central tube 41. The membrane separation device 110 may be further provided with an exterior material (not shown).

As the supply-side flow passage material 43 and the permeation-side flow passage material 44, a resin net composed of polyphenylene sulfide (PPS) or an ethylene-chlorotrifluoroethylene copolymer (ECTFE) can be used, for example.

Membrane separation using the membrane separation device 110 is carried out by the following method, for example. First, the liquid mixture 30 is supplied into an end of the wound laminate 42. An inner space of the central tube 41 is decompressed. Thereby, the permeation fluid 35 that has permeated through the separation membrane 10 of the laminate 42 moves into the central tube 41. The permeation fluid 35 is discharged to an outside via the central tube 41. The liquid mixture 30 (the concentrated fluid 36) processed by the membrane separation device 110 is discharged to the outside from an other end of the wound laminate 42. Thereby, the water can be separated from the liquid mixture 30.

EXAMPLES

Hereinafter, the present invention will be described in detail by way of examples and comparative examples. It should be noted that the present invention is not limited to these examples.

(Example 1)

First, polyether block amide (Pebax (registered trademark) 2533 available from Arkema) was dissolved in IPA at 80°C to prepare a coating liquid. A concentration of the polyether block amide in the coating liquid was 3 wt%. Next, the coating liquid was applied onto a porous support member to obtain a coating. As the porous support member, a UF membrane (ultrafiltration membrane) RS-50 (a laminate of a PVDF porous layer and a PET nonwoven fabric) available from Nitto Denko Corporation was used. The coating was formed on the PVDF porous layer of the RS-50. The application

of the coating liquid was carried out using an applicator with a gap of 155 μm. Next, the coating was dried to form an interlayer with a thickness of 0.5 μm.

Next, as tetracarboxylic dianhydride, bis(1,3-dioxo-1,3-dihydroisobenzofuran-5-carboxylic acid) ethylene (a compound represented by the formula (4) where A was the linking group 18 as well as $R^1$ to $R^6$ each were a hydrogen atom) was prepared. As diamine compounds, 4,4'-diaminodiphenyl ether (a compound represented by the formula (5) where B was the linking group 21 as well as $Ar^1$ and $Ar^2$ each were a p-phenylene group), and 3,5-diaminobenzoic acid were prepared. Next, the diamine compounds were dissolved in N-methyl-2-pyrrolidone to obtain a solution. The tetracarboxylic dianhydride was added to the obtained solution under a room temperature condition to obtain polyamide acid. Next, the polyamide acid was chemically imidized using triethylamine and acetic anhydride to obtain polyimide. The chemical imidization was carried out in N-methyl-2-pyrrolidone under a temperature condition of 60°C. In the polyimide, a ratio of structural units derived from the 3,5-diaminobenzoic acid with respect to structural units derived from all the diamine compounds was 10 mol%.

Next, the polyimide was dissolved in 1,3-dioxolane to obtain a solution. Next, the polyimide solution was added to a dispersion containing molecular sieve 4A (Zeoal4A (with a particle diameter of 300 nm) available from Nakamura Choukou Co., Ltd.), and these were mixed. The obtained coating liquid was applied onto the interlayer to obtain a coating. Next, the coating was dried to form a separation functional layer with a thickness of 1.25 μm. A content of the polyimide in the separation functional layer was 80 wt%, and a content of the molecular sieve 4A was 20 wt%. Thereby, a separation membrane of Example 1 was obtained.

(Examples 2 to 5 and 8 to 11)

Separation membranes of Examples 2 to 5 and 8 to 11 were obtained in the same manner as in Example 1, except that the thickness of the separation functional layer and the thickness of the interlayer were changed to the values shown in Table 4. The thickness of the interlayer was adjusted depending on the concentration of the polyether block amide in the coating liquid. The thickness of the separation functional layer was adjusted depending on a solid content concentration of the coating liquid.

(Examples 6 and 12)

Separation membranes of Examples 6 and 12 were obtained in the same manner as in Example 1, except that Pebax (registered trademark) 1657 available from Arkema was used as the polyether block amide, and the thickness of the separation functional layer and the thickness of the interlayer were changed to the values shown in Table 4.

(Example 7)

A separation membrane of Example 7 was obtained in the same manner as in Example 1, except that the interlayer was omitted and the thickness of the separation functional layer was changed to the value shown in Table 4.

(Example 13)

First, a coating liquid containing silicone polymer was prepared. A distance Ra between a Hansen solubility parameter of the silicone polymer and a Hansen solubility parameter of $H_2O$ was 19 $MPa^{1/2}$ or more. A content of the silicone polymer in the coating liquid was 2 wt%. Next, the coating liquid was applied onto a porous support member to obtain a coating. As the porous support member, a UF membrane (ultrafiltration membrane) RS-50 (a laminate of a PVDF porous layer and a PET nonwoven fabric) available from Nitto Denko Corporation was used. The coating was formed on the PVDF porous layer of the RS-50. The application of the coating liquid was carried out using an applicator with a gap of 130 μm. Next, the coating was dried to form an interlayer with a thickness of 1.8 μm.

Subsequently, it was attempted to form a separation functional layer with a thickness of 0.5 μm on the interlayer in the same manner as in Example 1, but a lot of defects occurred in the obtained layer (20 or more defects per 1000 $cm^2$ of a surface thereof) and a separation membrane was failed to be obtained.

[The number of defects in separation functional layer]

On each of the separation membranes of Examples 1 to 12, the number of defects in the separation functional layer was confirmed by the following method. First, a coloring material was dissolved in ethanol to produce a coloring liquid. This coloring liquid was applied onto the separation functional layer. Here, the coloring liquid entered into the separation functional layer at locations at which defects (pinholes) were present and colored such locations of the separation functional layer. Next, a surface of the separation functional layer was washed with ethanol. The number of

the locations (colored locations) at which the coloring liquid entered into the separation functional layer was confirmed visually. Thereby, the number of the defects in the separation functional layer per 1000 $cm^2$ of the surface of the separation functional layer was determined.

[Characteristics of separation membrane]

On each of the separation membranes of Examples 1 to 12, the flux F of the water permeating through the separation membrane and the separation factor $\alpha$ were measured by the following method. First, the separation membrane was placed in a metal cell, and the metal cell was sealed with an O-ring so that no leakage occurred. Next, 250 mL of a liquid mixture was injected into the metal cell in such a manner that the liquid mixture was in contact with a principal surface, on a side of the separation functional layer, of the separation membrane. The liquid mixture was composed substantially of ethanol and water. A concentration of the ethanol in the liquid mixture was 50 vol% when measured with a temperature of the liquid mixture at 20°C. Next, the metal cell was heated to 60°C in a water bath. The temperature of the liquid mixture in the metal cell was confirmed to be 60°C, and then a space, in the metal cell, that is adjacent to a principal surface, on a side of the porous support member, of the separation membrane was decompressed. This space was decompressed in such a manner that a pressure in the space was lower than an atmospheric pressure in a measurement environment by 100 kPa. Thereby, a gaseous permeation fluid was obtained. The gaseous permeation fluid was cooled using -196°C liquid nitrogen to liquefy the permeation fluid. A composition of the liquid permeation fluid was analyzed using gas chromatography (GC-3200 available from GL Sciences Inc.). The flux of the water that had permeated through the separation membrane and the separation factor $\alpha$ of the separation membrane were calculated based on the composition of the permeation fluid, a weight of the permeation fluid, etc. As for Example 7, a plurality of samples each obtained by cutting out a portion, of the separation functional layer, in which no defects were present as well as a plurality of samples each obtained by cutting out a portion, of the separation functional layer, in which defects were present were prepared, and each of these samples was subject to the above-mentioned measurements. In Table 4, the flux F of the water on Example 7 was an average value (0.57 $kg/m^2/hr$) of the fluxes of the water determined by these samples. In addition, Table 4 shows a minimum value (9.2) and a maximum (85.5) of the separation factor $\alpha$ determined by these samples of Example 7.

[Table 4]

| | Material of interlayer | Thickness of separation functional layer [$\mu$m] | Thickness of interlayer [$\mu$m] | Total value T of thickness of interlayer and thickness of separation functional layer [$\mu$m] | The number of defects in separation functional layer [defects/ 1000 $cm^2$] | Separation performance | |
|---|---|---|---|---|---|---|---|
| | | | | | | Flux F of water [$kg/m^2/hr$] | Separation factor $\alpha$ |
| Example 1 | Pebax2533 | 1.25 | 0.5 | 1.75 | 0 | 0.54 | 60.5 |
| Example 2 | Pebax2533 | 2.5 | 0.5 | 3.0 | 0 | 0.46 | 70.1 |
| Example 3 | Pebax2533 | 0.7 | 1.43 | 2.13 | 0 | 0.58 | 56.3 |
| Example 4 | Pebax2533 | 1.37 | 1.43 | 2.8 | 0 | 0.50 | 48.5 |
| Example 5 | Pebax2533 | 0.7 | 2.5 | 3.2 | 0 | 0.51 | 47.0 |
| Example 6 | Pebax1657 | 1.0 | 1.5 | 2.5 | 0 | 0.60 | 76.0 |
| Example 7 | Pebax2533 | 1.05 | 0 | 1.05 | 20 | 0.57 | 9.2-85.5 |
| Example 8 | Pebax2533 | 4.09 | 0.5 | 4.59 | 0 | 0.22 | 76.0 |

(continued)

| | Material of interlayer | Thickness of separation functional layer [μm] | Thickness of interlayer [μm] | Total value T of thickness of interlayer and thickness of separation functional layer [μm] | The number of defects in separation functional layer [defects/ 1000 $cm^2$] | Separation performance | |
|---|---|---|---|---|---|---|---|
| | | | | | | Flux F of water [$kg/m^2/hr$] | Separation factor α |
| Example 9 | Pebax2533 | 5.5 | 0.5 | 6.0 | 0 | 0.20 | 60.9 |
| Example 10 | Pebax2533 | 1.5 | 2.5 | 4.0 | 0 | 0.31 | 45.3 |
| Example 11 | Pebax2533 | 1.0 | 4.2 | 5.2 | 0 | 0.33 | 38.5 |
| Example 12 | Pebax1657 | 1.5 | 3.3 | 4.8 | 0 | 0.35 | 80.0 |

As shown in Table 4, on each of the separation membranes of Examples 1 to 6 in which the interlayer had a thickness of 0.1 μm to 2.5 μm as well as the total value T of the thickness of the interlayer and the thickness of the separation functional layer was less than 4.0 μm, the defects in the separation functional layer were less and the flux F of the water was more inhibited from decreasing than on the separation membranes of Examples 7 to 12. Each of the separation membranes of Examples 1 to 6 had the separation factor α that was 20 or more, which was a practically sufficient value.

INDUSTRIAL APPLICABILITY

The separation membrane of the present embodiment is suitable for separating water from a liquid mixture containing an alcohol and water. Particularly, the separation membrane of the present embodiment is useful for refining bioethanol.

## Claims

**1.** A separation membrane comprising a separation functional layer, an interlayer, and a porous support member in this order in a stacking direction, wherein

the interlayer has a thickness of 0.1 μm to 2.5 μm, and
a total value of the thickness of the interlayer and a thickness of the separation functional layer is less than 4.0 μm.

**2.** The separation membrane according to claim 1, wherein

the interlayer contains a polymer compound, and
a distance Ra between a Hansen solubility parameter of the polymer compound and a Hansen solubility parameter of $H_2O$ is less than 19 $MPa^{1/2}$.

**3.** The separation membrane according to claim 2, wherein the polymer compound contains at least one selected from the group consisting of polyether block amide, polyvinyl alcohol, polyether, and polyurethane.

**4.** The separation membrane according to claim 2 or 3, wherein the polymer compound contains polyether block amide.

**5.** The separation membrane according to any one of claims 1 to 4, wherein, the separation functional layer contains polyimide.

**6.** The separation membrane according to claim 5, wherein the polyimide includes a structural unit represented by formula (1) below:

[Chemical Formula 1]

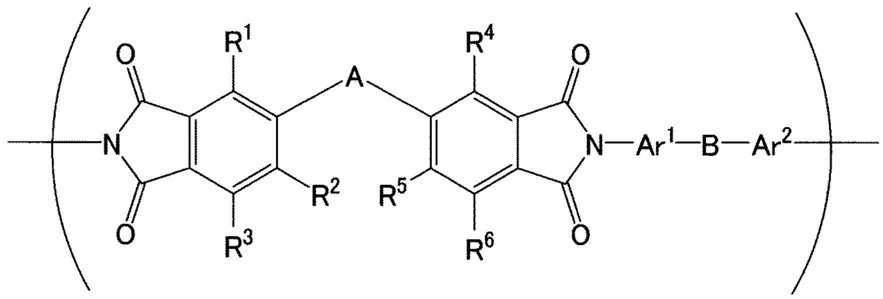
(1)

where A is a linking group having a solubility parameter, in accordance with a Fedors method, of more than 5.0 $(cal/cm^3)^{1/2}$; B is a linking group having a solubility parameter, in accordance with the Fedors method, of more than 8.56 $(cal/cm^3)^{1/2}$; $R^1$ to $R^6$ each are independently a hydrogen atom, a halogen atom, a hydroxy group, a sulfonic group, an alkoxy group having 1 to 30 carbon atoms, or a hydrocarbon group having 1 to 30 carbon atoms; $Ar^1$ and $Ar^2$ each are a divalent aromatic group; and $Ar^1$ and $Ar^2$ each are represented by formula (2) below when $Ar^1$ and $Ar^2$ each are a phenylene group that may have a substituent;

[Chemical Formula 2]

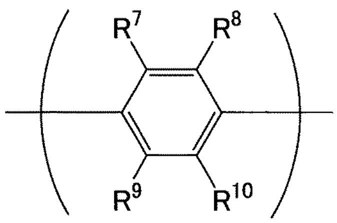
(2)

where $R^7$ to $R^{10}$ each are independently a hydrogen atom, a halogen atom, a hydroxy group, a sulfonic group, an alkoxy group having 1 to 30 carbon atoms, or a hydrocarbon group having 1 to 30 carbon atoms.

**7.** The separation membrane according to any one of claims 1 to 6, wherein the separation functional layer includes a matrix and a filler dispersed in the matrix.

**8.** The separation membrane according to any one of claims 1 to 7, wherein the thickness of the separation functional layer is 0.1 μm to 2.5 μm.

**9.** The separation membrane according to any one of claims 1 to 8, wherein the separation membrane is used for separating water from a liquid mixture containing an alcohol and water.

**10.** The separation membrane according to any one of claims 1 to 9, wherein

when, in a state in which a liquid mixture composed of ethanol and water is in contact with one surface of the separation membrane, a space adjacent to an other surface of the separation membrane is decompressed, a flux of the water permeating through the separation membrane is 0.40 $kg/m^2/hr$ or more, and
a concentration of the ethanol in the liquid mixture is 50 vol% when measured with a temperature of the liquid mixture at 20°C, the liquid mixture in contact with the separation membrane has a temperature of 60°C, and the space is decompressed in such a manner that a pressure in the space is lower than an atmospheric pressure in a measurement environment by 100 kPa.

**11.** The separation membrane according to any one of claims 1 to 10, wherein

the separation membrane has a separation factor α of 20 or more for water with respect to ethanol,
in a state in which a liquid mixture composed of ethanol and water is in contact with one surface of the separation membrane, the separation factor α is measured by decompressing a space adjacent to an other surface of the

separation membrane, and
a concentration of the ethanol in the liquid mixture is 50 vol% when measured with a temperature of the liquid mixture at 20°C, the liquid mixture in contact with the separation membrane has a temperature of 60°C, and the space is decompressed in such a manner that a pressure in the space is lower than an atmospheric pressure in a measurement environment by 100 kPa.

**12.** A separation membrane comprising a separation functional layer, an interlayer, and a porous support member in this order in a stacking direction, wherein

the interlayer contains a polymer compound, and
a distance Ra between a Hansen solubility parameter of the polymer compound and a Hansen solubility parameter of $H_2O$ is less than 19 $MPa^{1/2}$.

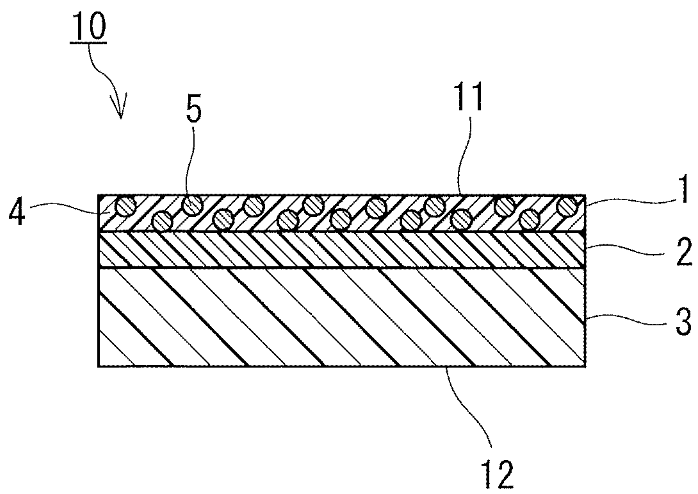


FIG.1

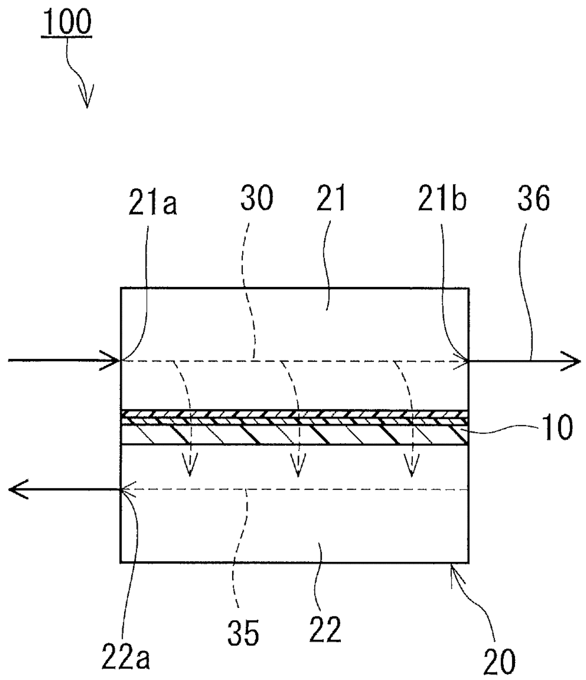


FIG.2

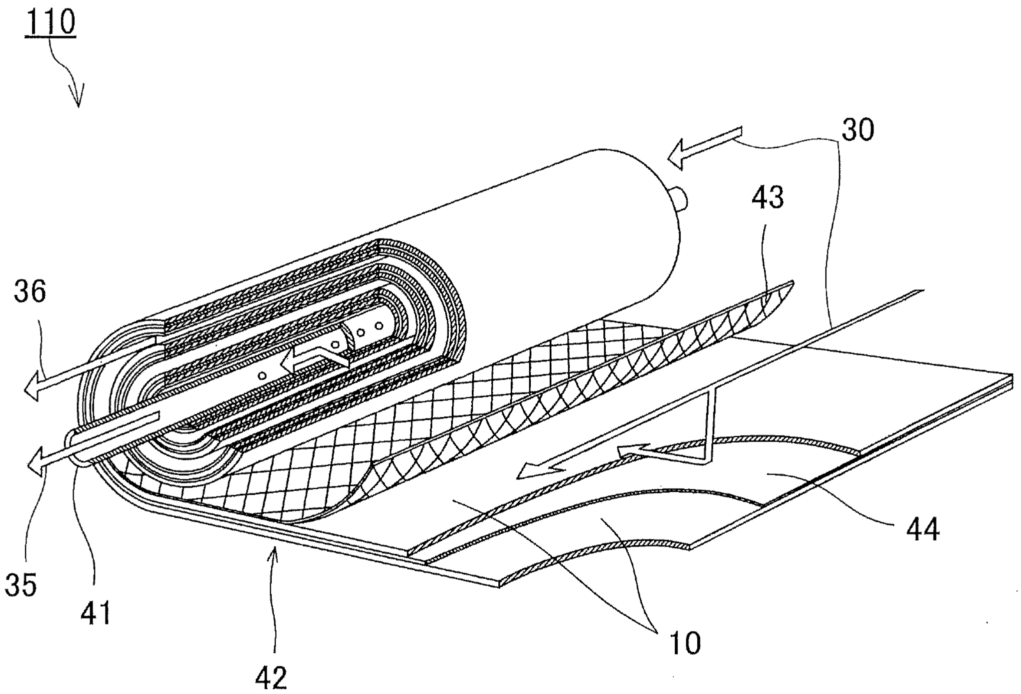


FIG.3

**INTERNATIONAL SEARCH REPORT**

International application No.
PCT/JP2021/005888

A. CLASSIFICATION OF SUBJECT MATTER
Int. Cl. B01D69/12(2006.01)i, B01D61/36(2006.01)i, B01D69/00(2006.01)i, B01D69/10(2006.01)i, B01D71/38(2006.01)i, B01D71/52(2006.01)i, B01D71/54(2006.01)i, B01D71/64(2006.01)i
FI: B01D69/12, B01D69/10, B01D69/00, B01D71/38, B01D71/52, B01D71/54, B01D71/64, B01D61/36

According to International Patent Classification (IPC) or to both national classification and IPC

B. FIELDS SEARCHED

Minimum documentation searched (classification system followed by classification symbols)
Int. Cl. B01D53/22, 61/00-71/82, C02F1/44

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2018-83193 A (NITTO DENKO CORP.) 31 May 2018, paragraphs [0069]-[0113] | 1-12<br>7-11 |
| X<br>Y<br>A | WO 2017/038285 A1 (FUJIFILM CORP.) 09 March 2017, paragraphs [0016]-[0138] | 1, 5-6, 8<br>7-8<br>2-4, 9-12 |
| X<br>Y<br>A | JP 2015-150474 A (FUJIFILM CORP.) 24 August 2015, paragraphs [0025]-[0112] | 1-3, 5-6, 8, 12<br>7-8<br>4, 9-11 |
| X<br>A | WO 2007/052497 A1 (HIROSHIMA UNIVERSITY) 10 May 2007, paragraphs [0051]-[0153] | 1, 8-11<br>2-7, 12 |

☒ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22.03.2021 | 06.04.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/005888

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2010-509034 A (NGK INSULATORS, LTD.) 25 March 2010, paragraphs [0032]-[0047] | 1, 8-11<br>2-7, 12 |
| X<br>A | JP 2002-253919 A (KYOCERA CORP.) 10 September 2002, paragraphs [0036]-[0048] | 1, 8<br>2-7, 9-12 |
| Y | JP 3-86220 A (BAYER AG) 11 April 1991, p. 2, lower left column, line 3 to p. 3, upper left column, line 14, p. 7, upper left column, line 4 to lower right column, line 4 | 7-11 |
| Y | US 6500233 B1 (CHEVRON U.S.A INC.) 31 December 2002, column 9, lines 35-49 | 7-11 |
| Y | JP 2017-500204 A (SABIC GLOBAL TECHNOLOGIES BV) 05 January 2017, claims | 7-11 |

Form PCT/ISA/210 (continuation of second sheet) (January 2015)

**INTERNATIONAL SEARCH REPORT**
Information on patent family members

International application No.
PCT/JP2021/005888

| Patent Documents referred to in the Report | Publication Date | Patent Family | Publication Date |
|---|---|---|---|
| JP 2018-83193 A | 31.05.2018 | US 2019/0314768 A1<br>paragraphs [0094]-[0155]<br>WO 2018/092858 A1<br>EP 3542891 A1<br>CN 109982772 A | |
| WO 2017/038285 A1 | 09.03.2017 | US 2018/0147546 A1<br>paragraphs [0059]-[0230] | |
| JP 2015-150474 A | 24.08.2015 | US 2016/0310911 A1<br>paragraphs [0048]-[0183]<br>WO 2015/122312 A1 | |
| WO 2007/052497 A1 | 10.05.2007 | (Family: none) | |
| JP 2010-509034 A | 25.03.2010 | JP 5469453 B2<br>US 2008/0105627 A1<br>paragraphs [0036]-[0053]<br>WO 2008/056542 A1<br>CA 2668402 A1<br>CN 101534935 A | |
| JP 2002-253919 A | 10.09.2002 | (Family: none) | |
| JP 3-86220 A | 11.04.1991 | DE 3927787 A1 | |
| US 6500233 B1 | 31.12.2002 | (Family: none) | |
| JP 2017-500204 A | 05.01.2017 | US 2015/0101986 A1<br>claims 1-26<br>WO 2015/057429 A1<br>CN 105636671 A<br>KR 10-2016-0074513 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61054222 A


### Non-patent literature cited in the description


- **ROBERT F. FEDORS.** *Polymer Engineering and Science,* 1974, (14), 147-154
- Hansen Solubility Parameters; A Users Handbook. CRC Press, 2007